# FASCICULE DE BREVET EUROPEEN

(11) **EP 0 844 686 B1**
(45) Date de publication et mention de la délivrance du brevet: **04.09.2002**
(21) Numéro de dépôt: 97402745.0
(22) Date de dépôt: 17.11.1997
(51) Int. Cl.: H01Q 1/28, H01Q 21/06, H04B 7/185

(54) **Système de relais d'émission**
System für Senderelaisstation
System of transmit relay station

(30) Priorité: 21.11.1996 FR 9614206
(43) Date de publication de la demande: 27.05.1998
(73) Titulaire: ALCATEL, 75008 Paris (FR)
(72) Inventeur: Caille, Gérard, 311700 Tournefeuille (FR); Argagnon, Claude, 311700 Tournefeuille (FR)
(74) Mandataire: Lamoureux, Bernard

(56) Documents cités:
- EP-A- 0 405 372
- EP-A- 0 531 877
- EP-A- 0 624 008
- FR-A- 2 727 934
- US-A- 5 400 040

## Description

La présente invention concerne de manière générale un système de relais d'émission, ou unité réémettrice, qui reçoit un premier signal sur une première fréquence porteuse en provenance d'un point distant pour réémettre sur une seconde fréquence porteuse un second signal sous la forme d'un faisceau couvrant une zone géographique. Les première et seconde fréquences porteuses peuvent être identiques, et les premier et second signaux modulant ces deux fréquences porteuses peuvent consister en un même signal.

L'invention trouve application par exemple dans les systèmes de télécommunications par satellites. Elle s'applique, selon des réalisations, à un système satellitaire de surveillance ou à un système de satellites à basse altitude. Le signal porté par la première fréquence porteuse est émis par une station sol à destination d'un satellite. Un système de relais d'émission, inclus dans ce dernier, réémet un signal porté par la seconde fréquence porteuse.

Une solution connue de la technique antérieure utilise des réseaux de formation de faisceau, ou BFN en littérature anglo-saxonne pour Beam Forming Network, qui ajuste la phase du signal produit par chaque élément rayonnant de sorte à former un faisceau qui est émis selon un front d'onde particulier définissant l'orientation du faisceau.

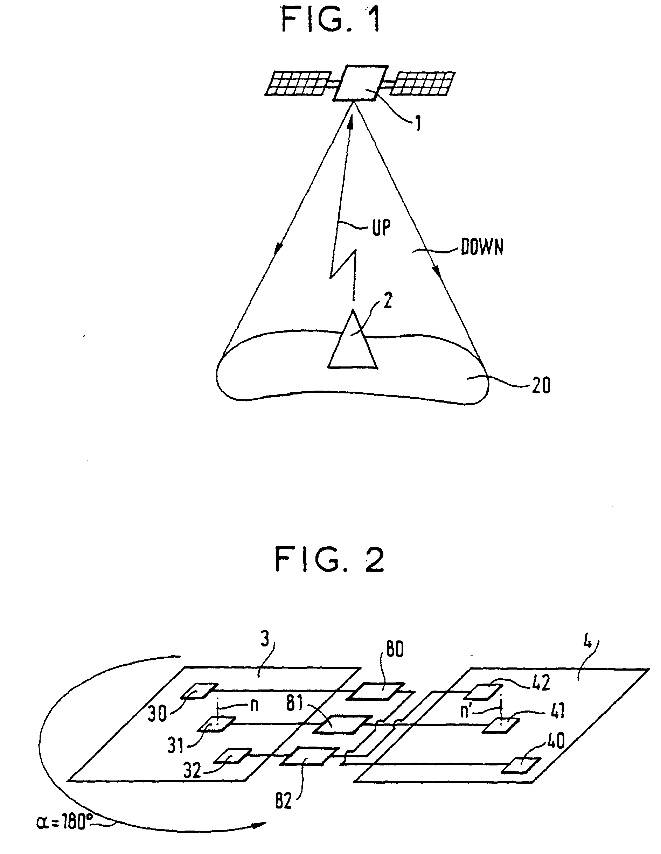

Comme montré dans la figure 1, dans certains réseaux de télécommunications par satellite, il peut être envisagé qu'au moins un satellite 1 réémet chaque signal reçu UP en provenance d'une station de base 2 dans la même direction que ce signal reçu et suivant un sens opposé. Ainsi, le satellite 1 est utilisé comme relais pour former un faisceau DOWN couvrant une zone géographique centrée sur la station de base en provenance de laquelle il a reçu un signal. Dans de telles applications, les réseaux de formation de faisceaux conventionnels peuvent être utilisés. Cela implique alors une complexité du traitement à bord du satellite pour l'application considérée.

Un premier objectif de l'invention est de remédier à cet inconvénient en fournissant un système de relais d'émission de faible complexité technique pour une application du type limitée au renvoi du signal reçu dans la même direction et selon un sens opposé.

Un second objectif de l'invention est de fournir une géométrie des antennes d'émission et de réception particulièrement avantageuse.

A cette fin, un système de relais d'émission comprenant des moyens d'antenne de réception munis d'une pluralité de premiers éléments rayonnants, des moyens d'antenne d'émission munis d'une pluralité de seconds éléments rayonnants, et des moyens de traitement à travers lesquels sont connectés les premiers éléments rayonnants et les seconds éléments rayonnants,
est caractérisé selon l'invention en ce que les moyens de traitement sont sous la forme de chaînes de traitement induisant toutes un même retard de propagation, chaque chaîne connectant un premier élément rayonnant donné avec un second élément rayonnant donné,
ledit second élément rayonnant donné étant défini par, d'une part,
une position angulaire, relativement à un second axe de symétrie traversant propre auxdits moyens d'antenne d'émission, qui est décalée sensiblement de 180° par rapport à une position angulaire du premier élément rayonnant, relativement à un premier axe de symétrie traversant propre auxdits moyens d'antenne de réception et parallèle audit second axe de symétrie traversant, et, d'autre part,
une excentricité dans les moyens d'antenne d'émission qui est fonction d'une excentricité dudit premier élément rayonnant donné dans lesdits moyens d'antenne de réception.

Avantageusement, les chaînes de traitement incluent des moyens de transposition en fréquence.

Selon une première réalisation, les moyens d'antenne d'émission et les moyens d'antenne de réception définissent des surfaces de portion de sphère respectivement convexe et concave.

Selon une seconde réalisation, les moyens d'antenne d'émission et les moyens d'antenne de réception définissent des surfaces hyperboloïdes respectivement convexe et concave. Pour cette variante, il peut être prévu que sur au moins l'une des surfaces hyperboloïdes, une densité des éléments rayonnants diminue sur au moins une portion de ladite surface hyperboloïde au fur et à mesure que l'on s'éloigne d'un sommet.

Les surfaces définissant les moyens d'antenne d'émission et les moyens d'antenne de réception sont déduites l'une de l'autre par une homothétie par rapport à un point dont le rapport d'homothétie est fonction du rapport entre fréquence d'émission et fréquence de réception.

Il peut être prévu, selon encore une autre variante, que les premiers éléments rayonnants des moyens d'antenne de réception et les seconds éléments rayonnants des moyens d'antenne d'émission sont supportés par une même surface selon une disposition alternée donnée.

D'autres caractéristiques et avantages de la présente invention apparaîtront plus clairement à la lecture de la description suivante, en référence aux dessins annexés correspondants, dans lesquels:
- la figure 1, déjà commentée montre un système satellitaire ; et
- la figure 2 est une représentation d'un système de relais d'émission selon une première variante de l'invention;
- la figure 3 montre un système de relais d'émission selon une seconde variante de l'invention;
- la figure 4 est un bloc-diagramme d'une parmi une pluralité de chaînes de traitement incluse dans le système de relais selon l'invention;
- la figure 5 est une représentation d'un système de relais d'émission selon une troisième variante de l'invention; et
- la figure 6 est une représentation d'un système de relais d'émission selon une quatrième variante de l'invention.

Dans les figures qui suivent, pour chaque type d'antenne proposée, seuls quelques éléments rayonnants sont représentés pour illustrer l'invention. L'homme du métier conviendra, qu'en pratique, ces éléments rayonnants, ou patchs, sont disposés en nombre relativement élevé pour former chaque antenne.

En référence à la figure 2, un premier système de relais d'émission selon l'invention comprend une antenne de réception plane 3 munie d'une pluralité de premiers éléments rayonnants 30, 31 et 32, une antenne d'émission plane 4 munie d'une pluralité de seconds éléments rayonnants 40, 41 et 42, et des chaînes de traitement 80, 81 et 82 à travers lesquelles sont connectés les premiers éléments rayonnants 30, 31 et 32 et les seconds éléments rayonnants 40, 41 et 42. Comme cela apparaît dans cette figure, chaque chaîne de traitement 80, 81 et 82 connecte un premier élément rayonnant donné respectif 30, 31 et 32 avec un second élément rayonnant donné respectif 40, 41 et 42. Selon l'invention, le second élément rayonnant donné 40, 41 et 42 possède une position angulaire dans l'antenne d'émission 4, relativement à un axe de symétrie traversant n', qui est décalée de 180° par rapport à une position angulaire du premier élément rayonnant donné correspondant 30, 31 et 32, relativement à un axe de symétrie traversant n. Chaque axe de symétrie traversant n, n' est un axe normal de symétrie, ou de révolution, de l'antenne considérée. En outre, le second élément rayonnant donné 40, 41, 42 possède une excentricité, par rapport à un point milieu de l'antenne d'émission 4, qui est fonction d'une excentricité du premier élément rayonnant donné 30, 31, 32 dans l'antenne de réception 3. Plus le premier élément rayonnant 30, 31, 32 est excentré dans l'antenne de réception, plus le second élément rayonnant 40, 41, 42 correspondant est excentré dans l'antenne d'émission. Ainsi, par exemple, l'élément rayonnant 30 qui est situé dans la partie supérieure gauche de l'antenne de réception 3 est relié, à travers la chaîne de traitement 80, à l'élément rayonnant 40 qui est situé dans la partie inférieure droite de l'antenne d'émission 4. Toutes les chaînes de traitement 80-82 possèdent une même longueur électrique et, en conséquence, induisent des retards de propagation qui sont égaux entre eux quelque soit la fréquence du signal. En résultat, le déphasage en réception entre deux éléments rayonnants 30, 31 ou 32 de l'antenne de réception est maintenu en émission entre deux éléments rayonnants correspondants 40, 41 ou 42 de l'antenne d'émission 4. Cela a pour conséquence qu'un front d'onde reçu selon un angle donné par l'antenne de réception 3 sera renvoyé selon ce même angle et suivant un sens opposé par l'antenne d'émission 4.

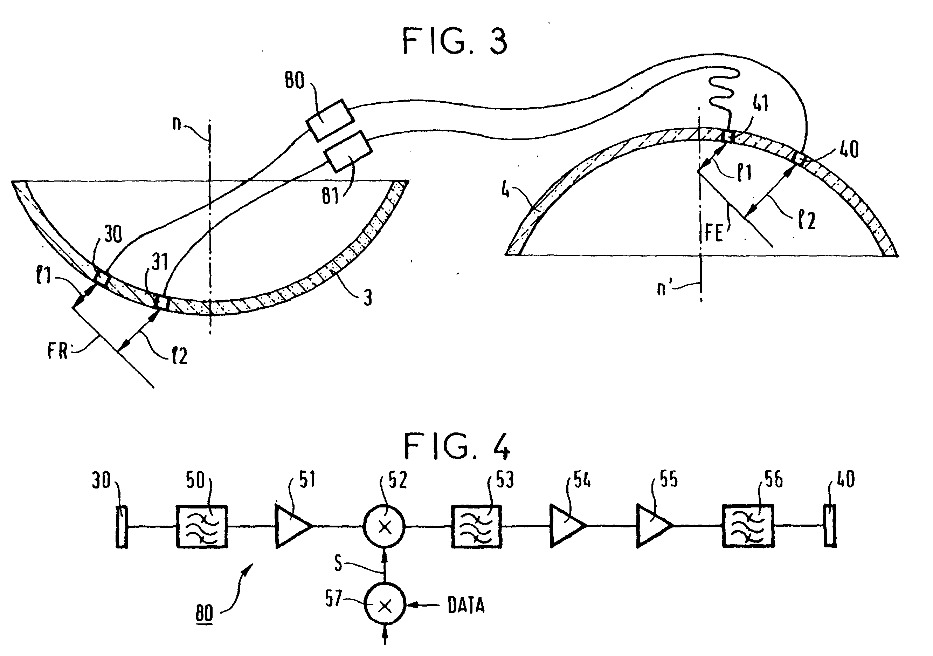

Comme montré dans la figure 4, une chaîne de traitement 80, ou 81 ou 82, reliant une premier élément rayonnant 30 à un second élément rayonnant 40 comprend en cascade, selon une réalisation donnée à titre d'exemple, un filtre d'entrée 50, un amplificateur de type LNA (Low Noise Amplifier), un convertisseur de fréquence 52, un filtre de réjection 53, un pré-amplificateur 54, un amplificateur de puissance 55 de type SSPA (Solid State Power Amplifier) et un filtre de sortie 56. Le convertisseur de fréquence 52 est destiné à transposer la fréquence du signal reçu via l'antenne 3 en la fréquence du signal émis via l'antenne 4 pour éviter tout brouillage entre faisceau de réception et faisceau d'émission.

Selon une seconde variante de l'invention illustrée dans la figure 3, les antennes de réception 3 et d'émission 4 définissent des surfaces de portion de sphère, ou calottes sphériques, respectivement convexe et concave. De la même manière que dans la variante précédente, un second élément rayonnant donné 40, 41 possède une position angulaire dans l'antenne d'émission 4 qui est décalée de 180° par rapport à une position angulaire du premier élément rayonnant donné 30, 31 correspondant dans l'antenne de réception 3. Une position angulaire d'un élément rayonnant dans une antenne est définie par rapport à un axe de symétrie traversant propre à cette antenne. Egalement, le second élément rayonnant donnée 40, 41 possède une excentricité dans l'antenne d'émission 4 qui est fonction d'une excentricité du premier élément rayonnant donné 30, 31 dans l'antenne de réception 3. En résultat de la combinaison de ces deux caractéristiques, et selon un exemple, un élément rayonnant excentré de l'antenne de réception 3 situé à gauche de l'antenne de réception 3 est relié à un élément rayonnant de l'antenne d'émission excentré 4 situé à droite de l'antenne d'émission 4. Sur cette figure 3, il est montré qu'un signal porté par un front d'onde FR qui est reçu selon un angle donné par l'antenne de réception 3 est réémis par l'antenne d'émission 4 selon un front d'onde FE selon ce même angle et suivant un sens opposé.

Il est à noter que dans toutes les variantes données ici, les géométries respectives des antenne d'émission 4 et antenne de réception 3 sont déduites l'une de l'autre par une homothétie par rapport à un point, le rapport d'homothétie étant fonction du rapport entre fréquence d'émission et fréquence de réception, la différence entre ces deux fréquences résultant de la transposition, ou conversion, de fréquence par le circuit 52. Cette homothétie est telle que les axes de symétrie traversants n et n' respectifs des antennes d'émission et de réception sont parallèles. Cela permet de garantir une émission par l'antenne 4 dans une direction identique à une direction de réception par l'antenne 3. En effet, les chemins électriques des N=2 chaînes de traitement 80, 81 étant identiques, un front d'onde FR de faisceau reçu par l'antenne de réception 3 est réémis par l'antenne d'émission 4 sous la forme d'un front d'onde possédant une même direction et un sens opposé. La géométrie des antennes d'émission et de réception dans la figure 4 est définie de la manière suivante. Le diamètre d'ouverture et le rayon de courbure de ces antennes sont adaptés au champ de vue à couvrir et à la taille de l'empreinte de faisceau souhaité au sol pour le faisceau rayonné par l'antenne 4.

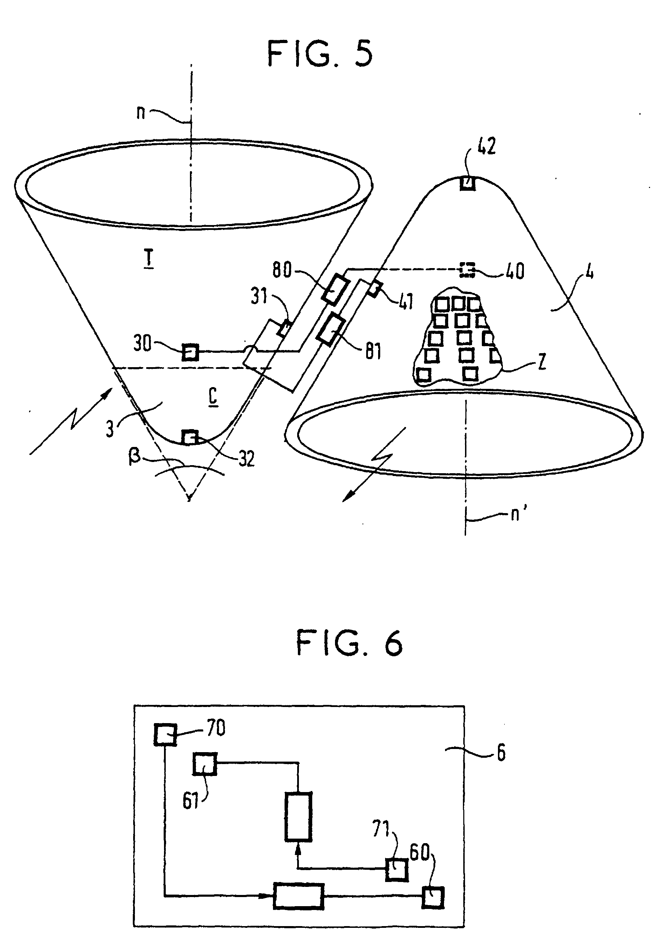

Dans la figure 5, est montrée une autre variante de l'invention dans laquelle les antenne de réception 3 et antenne d'émission 4 définissent chacune un hyperboloïde de révolution qui est asymptotique à un cône de demi-ouverture (β/2) typiquement comprise entre 25° et 35°. Les patchs de l'antenne de réception 3 sont portés par la surface extérieure de l'hyperboloïde 3 tandis que les patchs de l'antenne d'émission 4 sont portés par la surface intérieure de l'hyperboloïde 4. Chaque hyperboloïde de révolution comporte un tronc de cône T et un sommet C. Comme dans les variantes précédentes, un second élément rayonnant d'émission 40, 41 possède une position angulaire qui est décalée sensiblement de 180° par rapport à une position angulaire d'un premier élément rayonnant de réception 30, 31 qui lui correspond. En outre, ce second élément rayonnant d'émission 40, 41 possède une excentricité qui est fonction d'une excentricité du premier élément rayonnant qui lui correspond. Dans une telle réalisation, la section efficace d'antenne, définissant la puissance reçue en provenance de l'antenne pour un angle donné, diminue au fur et à mesure que l'on se rapproche du nadir. Cela résulte du fait que le tronc de cône T de l'hyperboloïde de révolution, très incliné, contribue de moins en moins au diagramme de rayonnement au fur et à mesure que l'on se rapproche du nadir. Dans une application pour satellite, cela garantit ainsi un gain sensiblement constant sur une zone au sol relativement étendue, sachant que des points éloignés du nadir sont situés à une distance plus grande du satellite. En pratique, en raison de la contribution importante des éléments rayonnants situés sur le tronc de cône T de l'hyperboloïde au diagramme de rayonnement pour des angles définis par la normale à la surface du tronc de cône T, il peut apparaître particulièrement avantageux, comme cela est représenté par la zone Z sur l'antenne d'émission 4, de diminuer la densité des éléments rayonnants sur au moins une portion du tronc de cône au fur et à mesure que l'on s'éloigne de la petite base du tronc de cône T, ou du sommet C, pour rejoindre la grande base du tronc de cône T. Selon une réalisation donnée à titre d'exemple, en désignant par H la hauteur de l'hyperboloïde de révolution, la densité des éléments rayonnants décroît régulièrement à partir de la hauteur H/2 jusqu'à la grande base du cône, le rapport de densité des éléments rayonnants entre le niveau de hauteur H/2 et le niveau de la grande base étant compris entre 3 et 4. Cette solution vise à abaisser les lobes secondaires apparaissant dans le diagramme de rayonnement et éviter la dissymétrie du diagramme de rayonnement. En résultat est obtenu un diagramme de rayonnement elliptique.

Il est à noter qu'une structure d'antenne active d'émission et/ou de réception utilisant la géométrie d'hyperboloïde de révolution montrée dans la figure 5 peut également être utilisée avantageusement dans une unité de relais d'émission à antenne active conventionnelle.

Selon encore une autre réalisation illustrée dans la figure 6, les premiers et seconds éléments rayonnants des antenne d'émission et antenne de réception peuvent être portés par une même surface 6, selon une disposition alternée donnée. Comme dans les variantes précédentes, un second élément rayonnant de réception possède une position angulaire qui est décalée sensiblement de 180° par rapport à une position angulaire d'un premier élément rayonnant de réception qui lui correspond, et possède une excentricité qui est fonction d'une excentricité de ce premier élément rayonnant correspondant. En pratique, différents motifs peuvent être définis, tel qu'un quadrillage matriciel dans lequel, en ligne et en colonne, sont disposés successivement un premier élément rayonnant puis un second élément rayonnant et ainsi de suite.

En revenant à la figure 4, dans toutes les variantes qui précèdent, le signal de transposition S peut être modulé par un signal de données utile DATA. Ce signal de données utile DATA est par exemple mémorisé sous forme numérique dans une mémoire à bord du satellite. Il consiste par exemple en une image obtenue par un dispositif d'imagerie embarqué à bord du satellite. Dans ce cas, par exemple, une fréquence porteuse pure, non modulée par un premier signal, est émis par la station de base 2, pour recevoir en retour le signal de données utile DATA modulé par une autre fréquence porteuse.

L'invention décrite ci-dessus n'est pas limitée à des applications satellites et peut être mise en oeuvre dans tout type de relais d'émission. L'homme du métier conviendra, en outre, que les moyens particuliers donnés dans le cadre de la description qui précède peuvent être remplacés par des moyens équivalents sans sortir du cadre de l'invention. Par exemple, les éléments rayonnants peuvent être remplacés par tous moyens équivalents dont la fonction est de produire/recevoir un rayonnement élémentaire.

## Revendications

1. Système de relais d'émission comprenant des moyens d'antenne de réception (3) munis d'une pluralité de premiers éléments rayonnants (30, 31, 32), des moyens d'antenne d'émission (4) munis d'une pluralité de seconds éléments rayonnants (40, 41, 42), et des moyens de traitement (80, 81, 82) à travers lesquels sont connectés les premiers éléments rayonnants (30, 31, 32) et les seconds éléments rayonnants (40, 41, 42),
**caractérisé en ce que** lesdits moyens de traitement (80, 81, 82) sont sous la forme de chaînes de traitement induisant toutes un même retard de propagation, chaque chaîne connectant un premier élément rayonnant donné avec un second élément rayonnant donné correspondant, ledit second élément rayonnant donné étant défini par, d'une part,
une position angulaire, relativement à un second axe de symétrie traversant (n') propre auxdits moyens d'antenne d'émission (4), qui est décalée sensiblement de 180° par rapport à une position angulaire dudit premier élément rayonnant donné, relativement à un premier axe de symétrie traversant (n) propre auxdits moyens d'antenne de réception et parallèle audit second axe de symétrie traversant (n'), et, d'autre part,
une excentricité dans lesdits moyens d'antenne d'émission (4) qui est fonction d'une excentricité dudit premier élément rayonnant donné dans lesdits moyens d'antenne de réception (3).

2. Système conforme à la revendication 1, **caractérisé en ce que** lesdites chaînes de traitement (80, 81, 82) incluent des moyens de transposition en fréquence (52).

3. Système conforme à la revendication 2, **caractérisé en ce qu'**un signal de transposition (S) appliqué auxdits moyens de transposition en fréquence (52) est modulé par des données utiles (DATA).

4. Système conforme à l'une quelconque des revendications 1 à 3, **caractérisé en ce que** lesdits moyens d'antenne d'émission (4) et lesdits moyens d'antenne de réception (3) définissent des surfaces de portion de sphère respectivement convexe et concave.

5. Système conforme à l'une quelconque des revendications 1 à 3, **caractérisé en ce que** lesdits moyens d'antenne d'émission (4) et lesdits moyens d'antenne de réception (3) définissent des surfaces hyperboloïdes respectivement convexe et concave.

6. Système conforme à la revendication 5, **caractérisé en ce que** sur au moins l'une desdites surfaces hyperboloïdes, une densité des éléments rayonnants diminue sur au moins une portion de ladite surface hyperboloïde au fur et à mesure que l'on s'éloigne d'un sommet (C).

7. Système conforme à l'une quelconque des revendications 4 à 6, lorsqu'elles dépendent de la revendication 2 ou 3, caractérisé en ce lesdites surfaces définissant lesdits moyens d'antenne d'émission et lesdits moyens d'antenne de réception sont déduites l'une de l'autre par une homothétie par rapport à un point dont le rapport d'homothétie est fonction du rapport entre fréquence d'émission et fréquence de réception.

8. Système conforme à l'une quelconque des revendications 1 à 3, **caractérisé en ce que** lesdits seconds éléments rayonnants (40, 41, 42) desdits moyens d'antenne d'émission (4) et lesdits seconds premiers éléments rayonnants (30, 31, 32) desdits moyens d'antenne de réception (3) sont supportés par une même surface selon une disposition alternée donnée.

9. Satellite comportant un système conforme à l'une quelconque des revendications précédentes.

## Patentansprüche

1. Senderelais-System mit Empfangsantennenmitteln (3), die mit einer Mehrzahl von ersten strahlenden Elementen (30, 31, 32) versehen sind, Empfangsantennenmitteln (4), die mit einer Mehrzahl von zweiten strahlenden Elementen (40, 41, 42) versehen sind, und Verarbeitungsmitteln (80,81,82), über die die ersten strahlenden Elemente (30,31,32) und die zweiten strahlenden Elemente (40,41,42) verbunden sind, **dadurch gekennzeichnet, dass** die Verarbeitungsmittel (80, 81, 82) die Form von Verarbeitungsketten haben, die sämtlich eine gleiche Ausbreitungsverzögerung bewirken, wobei jede Kette ein gegebenes erstes strahlendes Element mit einem entsprechenden gegebenen zweiten strahlenden Element verbindet, wobei das gegebene zweite strahlende Element definiert ist einerseits durch
eine Winkelposition in Bezug auf eine durchgehende zweite Symmetrieachse (n'), die zu den Sendeantennenmitteln (4) gehört, die im wesentlichen um 180° gegen eine Winkelposition des gegebenen ersten strahlenden Elements in Bezug auf eine erste durchgehende Symmetrieachse (n) versetzt ist, die zu den Empfangsantennenmitteln gehört und parallel zur zweiten durchgehenden Symmetrieachse (n') ist, und andererseits durch
eine Exzentrizität in den Sendeantennenmitteln (4), die Funktion einer Exzentrizität des gegebenen ersten strahlenden Elements in den Empfangsantennerimitteln (3) ist.

2. System nach Anspruch 1, **dadurch gekennzeichnet, dass** die Verarbeitungsketten (80, 81, 82) Frequenzverschiebungsmittel (52) umfassen.

3. System nach Anspruch 2, **dadurch gekennzeichnet, dass** ein an die Frequenzverschiebungsmittel (52) angelegtes Transpositionssignal (S) durch Nutzdaten (DATA) moduliert ist.

4. System nach einem beliebigen der Ansprüche 1 bis 3, **dadurch gekennzeichnet, dass** die Sendeantennenmittel (4) und die Empfangsantennenmittel (3) konvexe bzw. konkave Kugeloberflächenabschnitte definieren.

5. System nach einem beliebigen der Ansprüche 1 bis 3, **dadurch gekennzeichnet, dass** die Sendeantennenmittel (4) und die Empfangsantennenmittel (3) konvexe bzw. konkave Hyperboloid-Oberflächen definieren.

6. System nach Anspruch 5, **dadurch gekennzeichnet, daß** an einer wenigstens einer der Hyperboloid-Oberflächen eine Dichte der strahlenden Elemente auf wenigstens einem Bereich der Hyperboloid-Oberfläche mit zunehmender Entfernung von einem Scheitel (C) abnimmt.

7. System nach einem beliebigen der Ansprüche 4 bis 6, soweit von Anspruch 2 oder 3 abhängig, **dadurch gekennzeichnet, dass** die Sendeantennenmittel und die die Empfangsantennenmittel definierenden Oberflächen voneinander durch eine Homothetie in Bezug auf einen Punkt abgeleitet sind, wobei das Homothetie-Verhältnis eine Funktion des Verhältnisses zwischen Sendefrequenz und Empfangsfrequenz ist.

8. System nach einem beliebigen der Ansprüche 1 bis 3, **dadurch gekennzeichnet, dass** die zweiten strahlenden Elemente (40, 41, 42) der Sendeantennenmittel (4) und die zweiten ersten strahlenden Elemente (30,31, 32) der Empfangsantennenmittel (3) von einer gleichen Oberfläche in einer gegebenen alternierenden Anordnung getragen sind.

9. Satellit mit einem System nach einem beliebigen der vorhergehenden Ansprüche.

## Claims

1. A transmission relay system including receive antenna means (3) having a plurality of first radiating elements (30, 31, 32), transmit antenna means (4) having a plurality of second radiating elements (40, 41, 42), and processor means (80, 81, 82) via which the first radiating elements (30, 31, 32) and the second radiating elements (40, 41, 42) are connected,
**characterized in that** said processor means (80, 81, 82) are in the form of processors all inducing the same propagation time-delay, each processor connecting a given first radiating element with a corresponding given second radiating element defined by, on the one hand,
an angular position relative to a second through-axis of symmetry (n') specific to said transmit antenna means (4), which is offset substantially 180° relative to the angular position of said given first radiating element relative to a first through-axis of symmetry (n) specific to said receive antenna means and parallel to said second through-axis of symmetry (n'), and, on the other hand,
an eccentricity in said transmit antenna means (4) that is a function of an eccentricity of said given first radiating element in said receive antenna means (3).

2. A system according to claim 1, **characterized in that** said processors (80, 81, 82) include frequency transposers (52).

3. A system according to claim 2, **characterized in that** a transposition signal (S) applied to said frequency transposers (52) is modulated by payload data (DATA).

4. A system according to any of claims 1 to 3, **characterized in that** said transmit antenna means (4) and said receive antenna means (3) define respectively convex and concave part-spherical surfaces.

5. A system according to any of claims 1 to 3, **characterized in that** said transmit antenna means (4) and said receive antenna means (3) define respectively convex and concave hyperboloid surfaces.

6. A system according to claim 5, **characterized in that** the density of radiating elements on at least one of said hyperboloid surfaces decreases over at least a portion of said hyperboloid surface as the distance away from an apex (C) increases.

7. A system according to any of claims 4 to 6, when dependent on claim 2 or claim 3, **characterized in that** said surfaces defining said transmit antenna means and said receive antenna means are deduced from each other by a relationship of geometrical symmetry with respect to a point and the geometrical similarity ratio is a function of the ratio between the transmit frequency and the receive frequency.

8. A system according to any of claims 1 to 3, **characterized in that** said second radiating elements (40, 41, 42) of said transmit antenna means (4) and said second first [sic] radiating elements (30, 31, 32) of said receive antenna means (3) are supported by the same surface with a given alternating disposition.

9. A satellite including a system according to any preceding claim.
